# EUROPÄISCHE PATENTSCHRIFT

(11) **EP 3 050 464 B1**
(45) Veröffentlichungstag und Bekanntmachung des Hinweises auf die Patenterteilung: **27.12.2017**
(21) Anmeldenummer: 16151103.5
(22) Anmeldetag: 13.01.2016
(51) Int. Cl.: A47B 95/04, A47B 97/00, G09F 3/20

(54) **MÖBELTEIL MIT MÖBELTEIL-FUNKTIONSELEMENT**
FURNITURE PART COMPRISING FUNCTION ELEMENT
ELEMENT DE MEUBLE AVEC ELEMENT FONCTIONNEL

(30) Priorität: 28.01.2015 DE 202015000619 U
(43) Veröffentlichungstag der Anmeldung: 03.08.2016
(73) Patentinhaber: Grass GmbH, 6973 Höchst (AT)
(72) Erfinder: Hämmerle, Johannes, 6973 Höchst (AT)
(74) Vertreter: Patentanwälte Magenbauer & Kollegen Partnerschaft mbB

(56) Entgegenhaltungen:
- JP-A- 2000 102 462
- US-A- 4 096 603

## Beschreibung

Die Erfindung betrifft ein Möbelteil mit einem Möbelteil-Funktionselement zur Dekorations- oder Informationsanzeige, insbesondere in Form von Logos oder Firmenkennzeichnungen o.dgl., mit einem flächenförmigen Informationsabschnitt und einem mit Befestigungsmitteln ausgestatteten Befestigungsabschnitt des Möbelteil-Funktionselement zur Befestigung am Möbelteil. Ein solches Möbelteil ist beispielsweise aus US 4,096,603 bekannt.

Möbelteil-Funktionselemente sind in der Möbelbranche allgemein bekannt. Mit diesen Funktionselementen werden Möbelteile, z.B. die Zarge einer Schublade oder einer Schubladenführung mit Informationen, einem Logo des Herstellers oder des Aufstellers oder allgemein als Designelement, versehen.
Da z.B. verschiedenartige Zargenvarianten auf dem Markt sind, werden die Funktionselemente mitunter als einfache Aufklebeelemente oder als Aufdruck auf einem sichtbaren Bereich der Außenfläche befestigt. Es ist auch bekannt, dass in die Außenfläche eine Einsenkung eingefräst wird, in welcher eine Plakette befestigt, z.B. eingeklebt, eingerastet oder eingesteckt, werden kann. Eine Demontage der Plakette oder ein Entfernen eines Aufklebeelemente oder Aufdrucks ist nahezu nicht möglich. Oftmals wird dabei die Oberfläche verletzt oder sie ist, z.B. im Fall einer Einfräsung, nicht mehr geschlossen bzw. verdeckt. Weiterhin ist sowohl zur Montage als auch zur Demontage ein Werkzeug erforderlich, das mitunter nur dem Hersteller zur Verfügung steht. Schließlich geht die Demontage vielfach mit einer Zerstörung der Plakette einher. Verloren gegangene Plaketten können oftmals nicht mehr oder nur sehr schwer beschafft werden.
Der Erfindung liegt daher die Aufgabe zugrunde, ein Möbelteil-Funktionselement bereit zu stellen, das werkzeugfrei montierbar und demontierbar ist und für welches das Möbelteil keiner besonderen Vorkehrungen an der Sichtfläche bedarf. Außerdem soll das Funktionselement mit der einen Information oder dem einen Logo problemlos gegen andere Funktionselemente ausgetauscht werden können. Falls gewünscht, soll das Funktionselement auch gänzlich entfernbar sein, ohne dass dies am Möbelteil als störend oder als Mangel auffällt.

Die Aufgabe wird bei einem Möbelteil mit einem Möbelteil-Funktionselement der eingangs genannten Art erfindungsgemäß dadurch gelöst, dass die Befestigungsmittel des Befestigungsabschnitts Schiebeführungsmittel, über die ein Aufschieben auf einen Führungsabschnitt des Möbelteils ermöglicht ist, und Klemmmittel umfassen, über die das aufgeschobene Funktionselement am Führungsabschnitt klemmend gehalten ist.

Das Möbelteil-Funktionselement des erfindungsgemäßen Möbelteils weist also ein Befestigungsmittel auf, welche zwei Funktionen besitzt, nämlich einerseits Schiebeführungsmittel, mittels welcher das Funktionselement in Längsrichtung, z.B. einer Seitenwange einer Schublade oder einer Führungsschiene, aufgeschoben und geführt werden kann. Das Funktionselement führt also eine exakte Bewegung aus und kommt an dem gewünschten Ort am Möbelteil zu liegen. Andererseits dienen die Klemmmittel dafür, das aufgeschobene Führungselement in der gewünschten Position zu halten, so dass es aus dieser nicht heraus verschoben wird oder verloren geht. Die Schiebeführungsmittel und die Klemmmittel können als separate Bauteilelemente, also unabhängig voneinander ihre Funktionen ausführen, wobei zunächst die Schiebeführungsmittel das Funktionselement in die gewünschte Position bringt, und dann die Klemmmittel das Funktionselement in dieser Position fest halten.

Bei einer Weiterbildung der Erfindung weisen die Schiebeführungsmittel eine in Richtung wenigstens einer Stirnseite des Möbelteils hin offene Führungsnut auf, über die das Möbelteil von der betreffenden Stirnseite her auf die Schiebeführungsmittel aufschiebbar und/oder in die Führungsnut einschiebbar ist. Zwischen dem Informationsabschnitt und den Befestigungsmitteln befindet sich also die Führungsnut. Die Führungsnut ist dabei so gestaltet, dass sie den Führungsabschnitt des Möbelteils trägt oder dass der Führungsabschnitt in ihr zu liegen kommt und quasi in Form einer Schiene in der Führungsnut gleitet. Die Stirnwand des Möbelteils weist üblicherweise nach unten, so dass die Schiebeführungsmittel und die Klemmmittel in der Gebrauchslage des Möbelteils nicht zu sehen sind sondern lediglich der Informationsabschnitt.

Bevorzugt weist die Führungsnut zwei einander gegenüberliegende Nutwände, von denen die eine durch eine Rückseite des Informationsabschnitts und die andere durch den Befestigungsschnitt gebildet sind, und einen Nutboden auf, der von einem den Informationsabschnitt und den Befestigungsabschnitt miteinander verbindenden Bodenabschnitt gebildet ist. Der Bodenabschnitt untergreift den Führungsabschnitt des Möbelteils und greift vom Bereich dessen vorderer Seitenwand (Sichtwand) in den Bereich dessen hinterer Seitenwand (Rück- oder Innenwand). Die beiden Nutwände und der Nutboden bilden im weitesten Sinne eine in Richtung des aufzunehmenden Führungsabschnitts des Möbelteils offene U-Schiene.

Bei einer Weiterbildung der Erfindung ist vorgesehen, dass die Klemmmittel wenigstens einen, insbesondere mehrere elastisch nachgiebige Klemmfinger aufweisen, die beim Aufschieben des Funktionselements elastisch zurückbiegbar sind und anschließend in einer Klemmstellung in klemmender Anlage zu dem Führungsabschnitt des Möbelteils liegen. Beim Aufschieben des Funktionselements werden die Klemmfinger derart elastisch verschwenkt, dass sie entweder mit Abstand zum Möbelteil liegen oder dieses nur berühren, jedoch in dieses nicht eingreifen oder einrasten. Das Funktionselement ist also frei verschieblich gegenüber dem Führungsabschnitt.

Bei einer bevorzugten Ausführungsform sind mehrere Klemmfinger in Längsrichtung des Funktionselements in Reihe hintereinander angeordnet vorgesehen. Mittels dieser mehrerer Klemmfinger können unterschiedliche Positionen des Funktionselements eingenommen werden, je nach dem welcher Klemmfinger in der Endposition in welche Fixieraufnahme am Möbelteil eingreift. In der Endposition können auch mehrere Klemmfinger in eine oder mehrere Fixieraufnahmen eingreifen.

Erfindungsgemäß weist der wenigstens eine Klemmfinger einen Schwenklagerabschnitt auf, der insbesondere einstückig an den Bodenabschnitt der Führungsnut angesetzt ist. Mittels des Schwenklagerabschnitts werden die Klemmkraft und das Elastizitätsvermögen des Klemmfingers eingestellt. Dabei bleibt der Bodenabschnitt beim Aufschieben des Funktionselements weitestgehend unverformt.

Bei einer erfindungsgemäßen Variante ist vorgesehen, dass der wenigstens eine Klemmfinger einen Mittelabschnitt aufweist, der in der Klemmstellung im Wesentlichen parallel zur Rückseite des Informationsabschnitts angeordnet ist. Über die Länge, Ausrichtung und Neigung des Mittelabschnitts können ebenfalls die Klemmkraft und das Elastizitätsvermögen des Klemmfingers eingestellt werden. Außerdem vergrößert das Funktionselement nur geringfügig die Dicke des Möbelteils.

Mit besonderem Vorzug weist der Klemmfinger einen Klemmabschnitt auf, der in der Klemmstellung in Anlage zum Führungsabschnitt des Möbelteils liegt. Dabei ist am Klemmabschnitt wenigstens eine nach innen, zum Informationsabschnitt hin ragende Klemmnase angeordnet. Diese Klemmnase dient als Rastmittel und verrastet selbsttätig am Führungsabschnitt, wenn das Funktionselement seine Endposition einnimmt.

Ein erfindungsgemäßes Merkmal sieht vor, dass Positionsfixiermittel zur Fixierung der Position des Funktionselementes im aufgeschobenen Zustand in und entgegen einer Schieberichtung, oder senkrecht zu dieser, vorgesehen sind. Diese Positionsfixiermittel können auch von der Klemmnase gebildet werden, die in den Führungsabschnitt einrasten. Bei einer anderen Variante werden die Positionsfixiermittel von einem oder mehreren separaten Elementen gebildet, die zusätzlich am Klemmmittel vorgesehen sind und gegebenenfalls auch manuell betätigbar sind.

Dabei können bei einer erfindungsgemäßen Weiterbildung der Erfindung die Positionsfixiermittel wenigstens eine, insbesondere an dem wenigstens einen Klemmfinger ausgebildete Klemmnase aufweisen, die im aufgeschobenen Zustand und in der gewünschten Position des Funktionselementes in eine Fixieraufnahme am Führungsabschnitt des Möbelteils eingreifen. Die Position der Fixieraufnahme ist dabei so gewählt, dass sie auch nach der Demontage des Funktionselements nicht sichtbar sind und die Sichtfläche das Möbelteils nicht verändern oder stören.
Bevorzugte, erfindungsgemäße Ausführungsformen sehen vor, dass der Informationsabschnitt eine flächige, insbesondere plane, vertiefte oder erhabene Vorderseite aufweist, die insbesondere mit einer eine Information und/oder ein Bild wiedergebenden Bedruckung versehen ist. Dabei können der Hersteller oder Aufsteller, Seriennummern, ein Logo, eine Brailleschrift oder eine farbige Fläche aufgedruckt sein, und/oder der Informationsabschnitt kann aus einem anderen Material bestehen oder die Sichtfläche eine vollständige oder teilweise, d.h. partielle andersartige Strukturierung aufweisen.
Erfindungsgemäße Ausgestaltungen des Möbelteil-Funktionselements sehen vor, dass sie aus Metall und/oder Kunststoff bestehen, insbesondere in Form eines Kunststoffspritzgießteils, Druckguss, Stanzteils, Blechbiegeteils oder einer Metallspange. Derartige Funktionselements können nicht nur an das gewünschte Design sondern auch an die Hochwertigkeit des Möbelteils angepasst sein. Außerdem erlauben derartige Funktionselemente eine einfache Herstellung und deren problemlose Montage am Möbelteil.

Die Erfindung betrifft ein Möbelteil, mit einem Möbelteil-Funktionselement, das einen flächenförmigen Informationsabschnitt und einen mit Befestigungsmitteln ausgestatteten Befestigungsabschnitt aufweist, über das es am Möbelteil befestigt ist, wobei das Möbelteil-Funktionselement die zuvor genannten und nachfolgenden Merkmale aufweist, die entweder in jeder beliebigen Kombination oder auch einzeln am Funktionselement verwirklicht sind.
Dabei kann das Möbelteil z.B. als Tür, Schublade, Auszug oder Klappe ausgebildet sein. Bevorzugt ist das Funktionselement an einem beweglichen Möbelteil und an einer Sichtfläche montiert.
Weitere Vorteile, Merkmale und Eigenschaften der Erfindung ergeben sich aus der nachfolgenden Beschreibung, in der unter Bezugnahme auf die Zeichnung ein Ausführungsbeispiel der Erfindung beschrieben ist.

In der Zeichnung zeigen:
- Figur 1: eine perspektivische Ansicht eines Ausschnitts einer Auszugs mit einer Seitenwange;
- Figur 2: eine perspektivische Ansicht auf die Innenseite eines Ausschnitts der Seitenwange gemäß einem Ausführungsbeispiel der Erfindung;
- Figur 3: eine vergrößerte Wiedergabe des Ausschnitts III gemäß Figur 2;

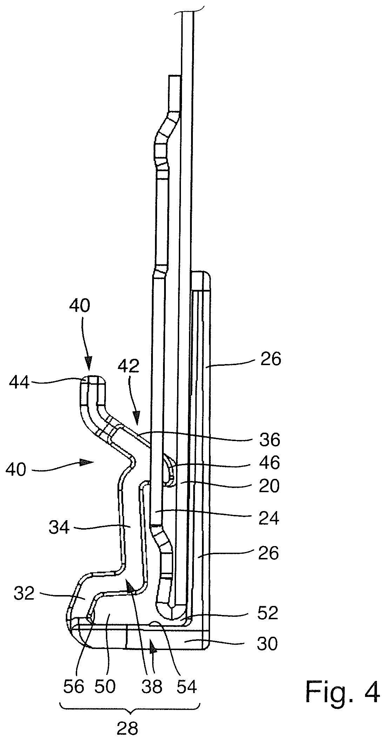

- Figur 4: einen Längsschnitt IV - IV durch den Ausschnitt gemäß Figur 3;
- Figur 5: eine perspektivische Ansicht auf die Rückseite des erfindungsgemäßen Funktionselements;
- Figur 6: eine perspektivische Ansicht auf die Innenseite eines Ausschnitts der Seitenwange gemäß einem nicht erfindungsgemäßen Ausführungsbeispiel;
- Figur 7: eine vergrößerte Wiedergabe des Freischnitts VII - VII gemäß Figur 6; und
- Figur 8: einen Längsschnitt VIII - VIII durch den Freischnitt gemäß Figur 7.

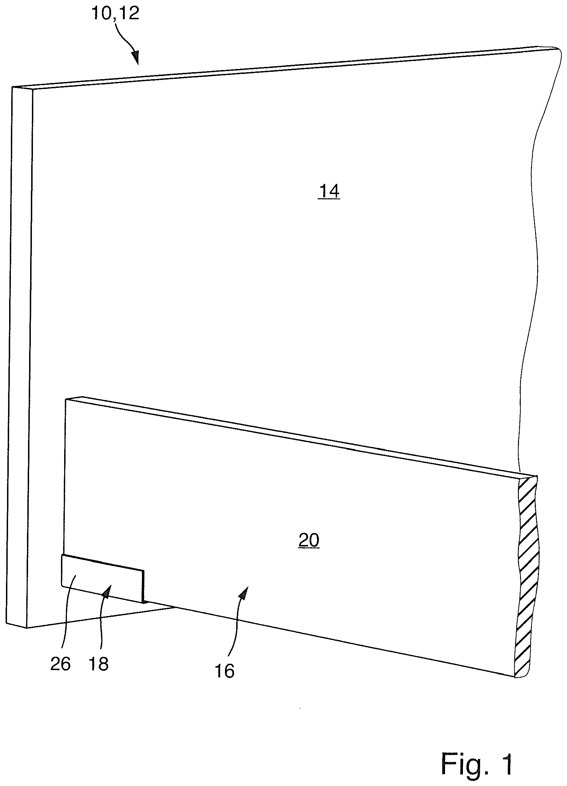

Die Figur 1 zeigt einen Ausschnitt eines als Auszug 10 ausgebildeten Möbelteils 12, von welchem eine Frontplatte 14 sowie eine Seitenwange 16 sichtbar sind. An der sichtbaren Seitenfläche der Seitenwange 16 befindet sich ein Funktionselement 18, welches als Informationsträger und/oder Designelement verwendbar ist.

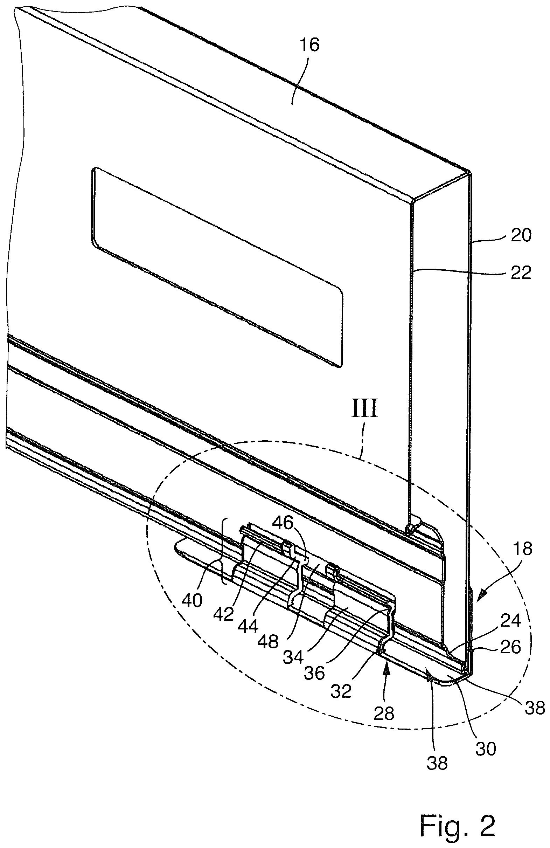

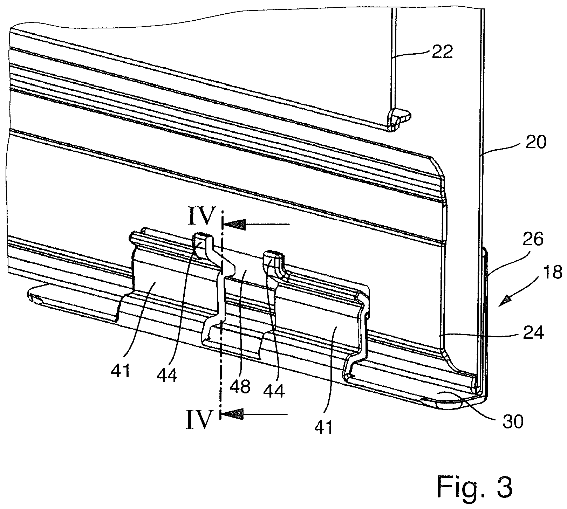

In der Figur 2 ist die Innenseite der Seitenwange 16 in vergrößerter Wiedergabe dargestellt, wobei erkennbar ist, dass diese aus einem Blechbiegeteil besteht und eine äußere Seitenwand 20 sowie eine innere Seitenwand 22 aufweist. Das untere Ende der äußeren Seitenwand 20 ist nach innen umgebogen und in Richtung der inneren Seitenwand 22 umgeschlagen und bildet einen Führungsabschnitt 24, zu dem in Figur 3 näher Bezug genommen wird. Außerdem ist das Funktionselement 18 erkennbar, welches einen auf der sichtbaren äußeren Seitenwand 20 aufliegenden Informationsabschnitt 26 sowie einen an der inneren Seitenwand 22 anliegenden Befestigungsabschnitt 28 aufweist. Der Befestigungsabschnitt 28 erstreckt sich ausgehend vom unteren Ende des vertikalen Informationsabschnitts 26 um das untere Ende der Seitenwange 16 herum und entlang des Funktionsabschnitts 24 nach oben. Dabei ist erkennbar, dass der Befestigungsabschnitt 28 einen im Wesentlichen horizontalen Bodenabschnitt 30, einen sich daran anschließenden Schwenklagerabschnitt 32, einen Mittelabschnitt 34 sowie einen Klemmabschnitt 36 aufweist.

Der Befestigungsabschnitt 28 wird im Wesentlichen von einem Schiebeführungsmittel 38 sowie einem Befestigungsmittel 40 gebildet. In diesem Schiebeführungsmittel 38 erstreckt sich der Bodenabschnitt 30, wobei Befestigungsmittel 40 vom Schwenklagerabschnitt 32 und Mittelabschnitt 34 gebildet werden. Schließlich gehen die Befestigungsmittel 40 in Form von Klemmfingern 41 in Klemmmittel 42 sowie Positionsfixiermittel 44 über, in welchen sich der Klemmabschnitt 36 befindet.

Es ist erkennbar, dass die Klemmmittel 42 eine Klemmnase 46 aufweisen, die in eine am Führungsabschnitt 24 vorgesehene Fixieraufnahme 48 eingreift. Die Fixieraufnahme 48 wird von einem rechteckförmigen Ausschnitt gebildet, der aber lediglich an der Rückseite der Seitenwange 16, d.h. am Führungsabschnitt 24, vorgesehen ist und daher die äußere Seitenwand 20 nicht verletzt wird und von außen nicht sichtbar ist.

Um das Funktionselement 18 exakt positionieren zu können, weist der Befestigungsabschnitt 28 das Schiebeführungsmittel 38 auf, in welchem sich eine Führungsnut 50 befindet. Diese Führungsnut 50 wird an der Innenseite des Informationsabschnitts 26 von einer ersten Nutwand 52, einem Nutboden 54 sowie einer zweiten Nutwand 56, die an der Innenseite des Schwenklagerabschnitts 32 vorgesehen ist, gebildet. In dieser Führungsnut 50 sitzt nun der Führungsabschnitt 24, so dass das Funktionselement 18 orthogonal zur Zeichenebene oder von unten auf diesen aufgeschoben werden kann. Sobald die Klemmnasen 46 zur Fixieraufnahme 48 fluchten, rasten diese ein und fixieren das Funktionselement 18.

Eine Demontage des Funktionselements 18 erfolgt manuell dadurch, dass die Klemmnasen 46 aus der Fixieraufnahme 48 ausgehoben werden, indem das Befestigungsmittel 40 am Positionsfixierelement 44 aufgebogen wird. Das Funktionselement 18 ist entweder ein Blechteil oder ein Spritzgussteil und daher elastisch.

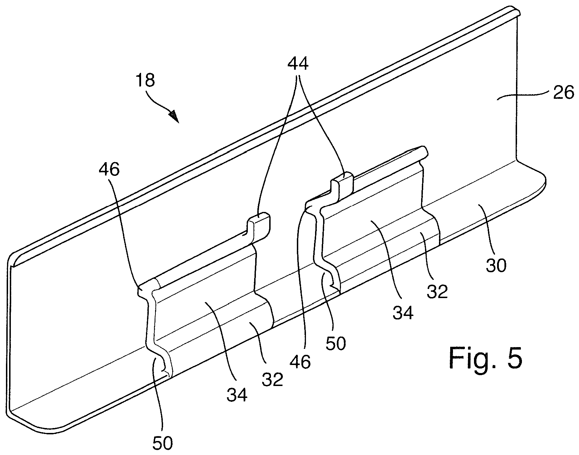

Die Rückseite des Funktionselements 18 ist in der Figur 5 in perspektivischer Lage dargestellt und die einzelnen Bauteile deutlich erkennbar. Insbesondere die Positionsfixiermittel 44, die mit einem oder zwei Fingern ergriffen werden können, sind erkennbar, so dass die Klemmnasen 46 aus der Fixieraufnahme 48 ausgehoben werden können. Sowohl die Führungsnut 50 als auch der Mittelabschnitt 34 dienen zur Führung des Funktionselements 18 während des Aufschubs auf die Seitenwange 16 des Möbelteils 12 und anschließenden Positionierung am Möbelteil 12.

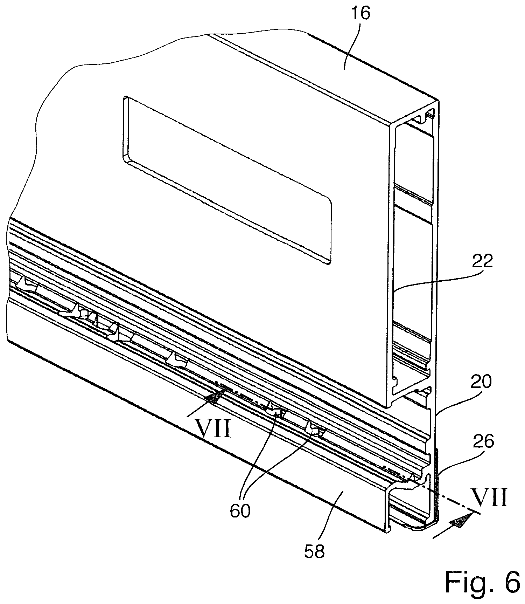

Die Figuren 6 bis 8 zeigen das Funktionselement 18 an einer zweiten Seitenwange 16, die aus einem Druckgusselement, z.B. aus einer Aluminiumlegierung, besteht. Insbesondere ist an der Rückseite der äußeren Seitenwand 20 der Seitenwange 16 eine Führungsleiste 58 angeformt. Diese Führungsleiste 58 dient z.B. zur Aufnahme des Randes eines Bodens des Auszugs 10 und kann z.B. auch Teile einer Schiene oder Teleskopschiene aufnehmen. An der Oberseite der Führungsleiste 58 sind Aufnahmen 60 vorgesehen, in welche die Positionsfixiermittel 44 des Funktionselements 18 eingreifen. Die beiden Klemmnasen 46 der Klemmmittel 42 liegen lediglich an der Innenfläche der äußeren Seitenwand 20 an, durchgreifen diese aber nicht.

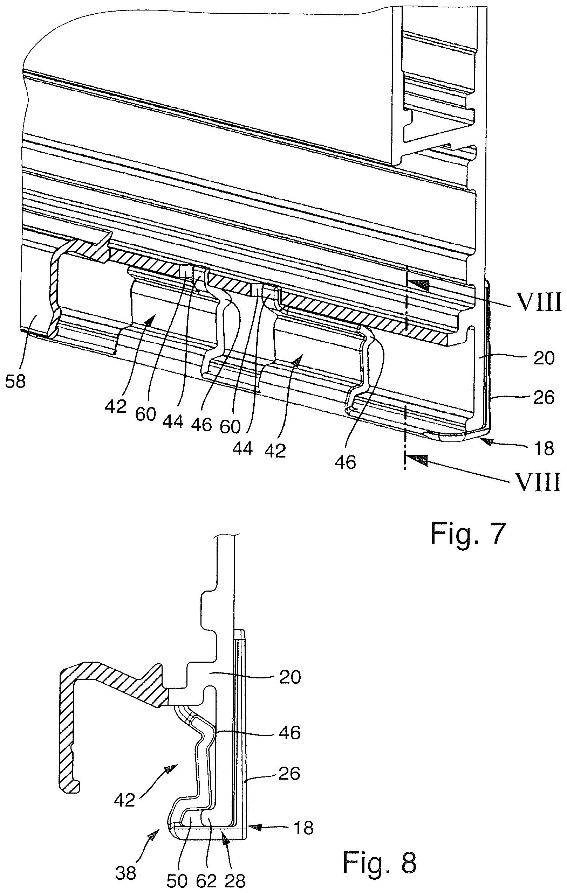

Hervorzuheben ist noch, dass das untere Ende der äußeren Seitenwand 20 mit einem nach innen abragenden Fuß 62 versehen ist, der in die Führungsnut 50 des Befestigungsabschnitts 28 eingreift und vom Schiebeführungsmittel 38 oberseitig übergriffen ist. Auf diese Weise wird verhindert, dass das Funktionselement 18 nach unten abgezogen wird. Die Schiebeführungsmittel 38 erlauben lediglich ein Aufschieben des Funktionselements 18 in zur Ebene der Figur 8 orthogonaler Richtung auf das untere Ende der äußeren Seitenwand 20 der Seitenwange 16 des Möbelteils 12.

Derartige Funktionselemente 18 können also problemlos ohne Werkzeuge auf eine Seitenwange 16 montiert und wieder demontiert oder auch ausgetauscht werden, ohne dass die Sichtfläche der Seitenwange 16 dadurch beschädigt wird.

## Patentansprüche

1. Möbelteil, mit einer Seitenwange (16) und einer Frontplatte (14), wobei die Seitenwange (16) eine äußere Seitenwand (20) und eine innere Seitenwand (22) aufweist, und mit einem Möbelteil-Funktionselement (18) zur Dekorations- oder Informationsanzeige, insbesondere in Form von Logos o.dgl., wobei sich das Möbelteil-Funktionselement (18) an der sichtbaren Seitenfläche der Seitenwange befindet und einen flächenförmigen Informationsabschnitt (26) und einen mit Befestigungsmitteln (40) ausgestatteten Befestigungsabschnitt (28) aufweist, über das es am Möbelteil (12) befestigt ist, wobei ein Führungsabschnitt (24) durch ein nach innen umgebogenes und in Richtung der inneren Seitenwand (22) umgeschlagenes unteres Ende der äußeren Seitenwand (20) gebildet ist, wobei die Befestigungsmittel (40) des Befestigungsabschnitts (28) Schiebeführungsmittel (38), über die ein Aufschieben auf den Führungsabschnitt (24) des Möbelteils (12) ermöglicht ist, und Klemmmittel (42) umfassen, über die das aufgeschobene Funktionselement (18) am Führungsabschnitt (24) klemmend gehalten ist.

2. Möbelteil nach Anspruch 1, **dadurch gekennzeichnet, dass** die Schiebeführungsmittel (38) eine zu wenigstens einer Stirnseite des Möbelteils (12) hin offene Führungsnut (50) aufweisen, über die das Möbelteil (12) von der betreffenden Stirnseite her auf die Schiebeführungsmittel (38) aufschiebbar ist.

3. Möbelteil nach Anspruch 1 oder 2, **dadurch gekennzeichnet, dass** die Führungsnut (50) zwei einander gegenüberliegende Nutwände (52, 56), von denen die eine durch eine Rückseite des Informationsabschnitts (26) und die andere durch den Befestigungsschnitt (28) gebildet sind, und einen Nutboden (54) aufweist, der von einem den Informationsabschnitt (26) und den Befestigungsabschnitt (28) miteinander verbindenden Bodenabschnitt (30) gebildet ist.

4. Möbelteil nach einem der vorhergehenden Ansprüche, **dadurch gekennzeichnet, dass** die Klemmmittel (42) wenigstens einen, insbesondere mehrere elastisch nachgiebige Klemmfinger (41) aufweisen, die beim Aufschieben des Funktionselements (18) elastisch zurückbiegbar sind und anschließend in einer Klemmstellung in klemmender Anlage zu dem Führungsabschnitt (24) des Möbelteils (12) liegen.

5. Möbelteil nach Anspruch 4, **dadurch gekennzeichnet, dass** mehrere Klemmfinger (41) in Längsrichtung des Funktionselements (18) in Reihe hintereinander angeordnet vorgesehen sind.

6. Möbelteil nach Anspruch 4 oder 5, **dadurch gekennzeichnet, dass** der wenigstens eine Klemmfinger (41) einen Schwenklagerabschnitt aufweist, der insbesondere einstückig an den Bodenabschnitt (30) der Führungsnut (50) angesetzt ist.

7. Möbelteil nach einem der Ansprüche 4 bis 6, **dadurch gekennzeichnet, dass** der wenigstens eine Klemmfinger (41) einen Mittelabschnitt (34) aufweist, der in der Klemmstellung im Wesentlichen parallel zur Rückseite des Informationsabschnitts (26) angeordnet ist.

8. Möbelteil nach einem der Ansprüche 4 bis 7, **dadurch gekennzeichnet, dass** der Klemmfinger (41) einen Klemmabschnitt (36) aufweist, der in der Klemmstellung in Anlage zum Führungsabschnitt (24) des Möbelteils (12) liegt.

9. Möbelteil nach Anspruch 8, **dadurch gekennzeichnet, dass** am Klemmabschnitt (36) wenigstens eine nach innen, zum Informationsabschnitt (26) hin ragenden Klemmnase (46) angeordnet ist.

10. Möbelteil nach einem der vorhergehenden Ansprüche, **gekennzeichnet durch** Positionsfixiermittel (44) zur Fixierung der Position des Funktionselementes (18) im aufgeschobenen Zustand in und entgegen einer Schieberichtung.

11. Möbelteil nach Anspruch 10, **dadurch gekennzeichnet, dass** die Positionsfixiermittel (44) wenigstens eine, insbesondere an dem wenigstens einen Klemmfinger (41) ausgebildete Klemmnase (46) aufweisen, die im aufgeschobenen Zustand in der gewünschten Position des Funktionselementes (18) in eine Fixieraufnahme (48) am Führungsabschnitt (24) des Möbelteils (12) eingreifen.

12. Möbelteil nach einem der vorhergehenden Ansprüche, **dadurch gekennzeichnet, dass** der Informationsabschnitt (26) eine flächige, insbesondere plane, vertiefte oder erhabene Vorderseite aufweist, die insbesondere mit einer Information wiedergebenden Bedruckung versehen ist.

13. Möbelteil nach einem der vorhergehenden Ansprüche, **dadurch gekennzeichnet, dass** es aus Metall und/oder Kunststoff besteht, insbesondere ein Kunststoffspritzgießteil, Stanzteil, Blechbiegeteil oder eine Metallspange ist.

14. Möbelteil nach einem der vorhergehenden Ansprüche, **dadurch gekennzeichnet, dass** es als Schubladeoder Auszug (10) ausgebildet ist.

## Claims

1. Furniture part with a side cheek (16) and a front panel (14), wherein the side cheek (16) has an outer side panel (20) and an inner side panel (22), and with a furniture part function element (18) for decoration or information display , in particular in the form of logos or the like, wherein the furniture part function element (18) is provided on the visible side face of the side cheek and comprises a flat information section (26) and a mounting section (28) equipped with mounting means (40), via which it is fixed to the furniture part (12), wherein a guide section (24) is formed by a lower end of the outer side panel (20), bent inwards and turned over towards the inner side panel (22), wherein the mounting means (40) of the mounting section (28) include sliding guidance means (38) which facilitate sliding on to the guide section (24) of the furniture part (12), and clamping means (42) through which the slid-on function element (18) is clamped to the guide section (24).

2. Furniture part according to claim 1, **characterised in that** the sliding guidance means (38) have a guide slot (50), open to at least one end face of the furniture part (12). , via which the furniture part (12) may be slid on to the sliding guidance means (38) from the relevant end face.

3. Furniture part according to claim 1 or 2, **characterised in that** the guide slot (50) has two slot sides (52, 56) lying opposite one another, of which one is formed by a rear side of the information section (26) and the other by the mounting section (28), and a slot base (54) which is formed by a base section (30) which connects the information section (26) and the mounting section (28) to one another.

4. Furniture part according to any of the preceding claims, **characterised in that** the clamping means (42) have at least one and preferably several elastic and flexible clamping finger(s) (41) which, in sliding-on of the function element (18), are bent back elastically and then lie in a clamped position in clamping contact with the guide section (24) of the furniture part (12).

5. Furniture part according to claim 4, **characterised in that** several clamping fingers (41) are provided, arranged in series one behind the other in the axial direction of the function element (18).

6. Furniture part according to claim 4 or 5, **characterised in that** the clamping finger or fingers (41) has or have a swivel bearing section which is attached, in particular integrally, to the base section (30) of the guide slot (50).

7. Furniture part according to any of claims 4 to 6, **characterised in that** the clamping finger or fingers (41) has or have a centre section (34) which, in the clamped position, is arranged substantially parallel to the rear side of the information section (26).

8. Furniture part according to any of claims 4 to 7, **characterised in that** the clamping finger (41) has a clamping section (36) which, in the clamped position, lies in contact with the guide section (24) of the furniture part (12).

9. Furniture part according to claim 8, **characterised in that** the clamping section (36) is provided with at least one clamping lug (46) extending inwards towards the information section (26).

10. Furniture part according to any of the preceding claims, **characterised by** position fixing means (44) for fixing the position of the function element (18) in the slid-on state in and against a direction of sliding.

11. Furniture part according to claim 10, **characterised in that** the position fixing means (44) have at least one clamping lug (46), formed in particular on the clamping finger or fingers (41) and engaging, in the slid-on state in the desired position of the function element (18), in a locating slot (48) on the guide section (24) of the furniture part (12).

12. Furniture part according to any of the preceding claims, **characterised in that** the information section (26) has a flat, in particular level, recessed or raised front side, which is provided in particular with printing which reproduces information.

13. Furniture part according to any of the preceding claims, **characterised in that** it is made of metal and/or plastic, being in particular a plastic injection moulding, a stamping, a bent sheet metal part or a metal clasp.

14. Furniture part according to any of the preceding claims, **characterised in that** it is in the form of a drawer or pull-out (10).

## Revendications

1. Élément de meuble, avec une joue latérale (16) et un panneau avant (14), dans lequel la joue latérale (16) présente une paroi latérale extérieure (20) et une paroi latérale intérieure (22), et avec un élément fonctionnel d'élément de meuble (18) pour l'affichage de décoration ou d'information, en particulier sous forme de logos ou similaires, dans lequel l'élément fonctionnel d'élément de meuble (18) se trouve au niveau de la surface latérale visible de la joue latérale et présente une section d'information (26) planiforme et une section de fixation (28) dotée de moyens de fixation (40), par le biais de laquelle il est fixé à l'élément de meuble (12),
dans lequel une section de guidage (24) est formée par une extrémité inférieure, repliée vers l'intérieur et rabattue en direction de la paroi latérale intérieure (22), de la paroi latérale extérieure (20), dans lequel les moyens de fixation (40) de la section de fixation (28) comprennent des moyens de guidage coulissants (38), qui permettent une poussée sur la section de guidage (24) de l'élément de meuble (12), et des moyens de serrage (42), par le biais desquels l'élément fonctionnel (18) poussé est maintenu par serrage au niveau de la section de guidage (24).

2. Élément de meuble selon la revendication 1, **caractérisé en ce que** les moyens de guidage coulissants (38) présentent une rainure de guidage (50) ouverte vers au moins une face avant de l'élément de meuble (12), par le biais de laquelle l'élément de meuble (12) peut être poussé de la face avant concernée sur les moyens de guidage coulissants (38).

3. Élément de meuble selon la revendication 1 ou 2, **caractérisé en ce que** la rainure de guidage (50) présente deux parois de rainure (52, 56) opposées l'une à l'autre, dont l'une est formée par une face arrière de la section d'information (26) et l'autre par la section de fixation (28), et un fond de rainure (54), qui est formé par une section de fond (30) reliant l'une à l'autre la section d'information (26) et la section de fixation (28).

4. Élément de meuble selon l'une quelconque des revendications précédentes, **caractérisé en ce que** les moyens de serrage (42) présentent au moins un, en particulier plusieurs doigts de serrage (41) élastiquement flexibles, qui peuvent être repliés élastiquement en arrière lors de la poussée de l'élément fonctionnel (18) et se trouvent ensuite dans une position de serrage en appui de serrage par rapport à la section de guidage (24) de l'élément de meuble (12).

5. Élément de meuble selon la revendication 4, **caractérisé en ce que** plusieurs doigts de serrage (41) sont prévus agencés l'un derrière l'autre en rangée dans le sens longitudinal de l'élément fonctionnel (18).

6. Élément de meuble selon la revendication 4 ou 5, **caractérisé en ce que** l'au moins un doigt de serrage (41) présente une section de palier pivotant, qui est appliqué en particulier d'un seul tenant sur la section de fond (30) de la rainure de guidage (50).

7. Élément de meuble selon l'une quelconque des revendications 4 à 6, **caractérisé en ce que** l'au moins un doigt de serrage (41) présente une section médiane (34), qui est agencée de manière sensiblement parallèle à la face arrière de la section d'information (26) dans la position de serrage.

8. Élément de meuble selon l'une quelconque des revendications 4 à 7, **caractérisé en ce que** le doigt de serrage (41) présente une section de serrage (36), qui se trouve dans la position de serrage en appui par rapport à la section de guidage (24) de l'élément de meuble (12).

9. Élément de meuble selon la revendication 8, **caractérisé en ce qu'**au moins un nez de serrage (46) dépassant vers la section d'information (26) vers l'intérieur est agencé au niveau de la section de serrage (36).

10. Élément de meuble selon l'une quelconque des revendications précédentes, **caractérisé par** des moyens de fixation de position (44) pour la fixation de la position de l'élément fonctionnel (18) à l'état poussé dans et contre la direction de coulissement.

11. Élément de meuble selon la revendication 10, **caractérisé en ce que** les moyens de fixation de position (44) présentent au moins un nez de serrage (46) réalisé en particulier au niveau de l'au moins un doigt de serrage (41), qui à l'état poussé dans la position souhaitée de l'élément fonctionnel (18) viennent en prise dans un logement de fixation (48) au niveau de la section de guidage (24) de l'élément de meuble (12).

12. Élément de meuble selon l'une quelconque des revendications précédentes, **caractérisé en ce que** la section d'information (26) présente une face avant plate, en particulier plane, en creux ou en relief, qui est dotée en particulier d'une impression restituant une information.

13. Élément de meuble selon l'une quelconque des revendications précédentes, **caractérisé en ce qu'**il est en métal et/ou plastique, est en particulier une pièce en matière plastique moulée par injection, une pièce découpée, une pièce de tôle cintrée ou une barrette métallique.

14. Élément de meuble selon l'une quelconque des revendications précédentes, **caractérisé en ce qu'**il est réalisé en tant que tiroir ou tiroir coulissant (10).
